# EUROPEAN PATENT SPECIFICATION

(11) **EP 4 075 313 B1**
(45) Date of publication and mention of the grant of the patent: **03.09.2025**
(21) Application number: 22167935.0
(22) Date of filing: 12.04.2022
(51) Int. Cl.: G06F 21/62, G06F 21/57

(54) **SYSTEMS AND METHODS FOR PURGING DATA FROM MEMORY**
SYSTEME UND VERFAHREN ZUM LÖSCHEN VON DATEN AUS EINEM SPEICHER
SYSTÈMES ET PROCÉDÉS DE PURGE DE DONNÉES À PARTIR D'UNE MÉMOIRE

(30) Priority: 15.04.2021 US 202117231121
(43) Date of publication of application: 19.10.2022
(73) Proprietor: Rockwell Automation Technologies, Inc., Mayfield Heights, OH 44124 (US)
(72) Inventor: Johnston, David A., Mayfield Heights, 44124 (US); Wylie, Dennis M., Mayfield Heights, 44124 (US); Copus, James R., Mayfield Heights, 44124 (US)
(74) Representative: Grünecker Patent- und Rechtsanwälte PartG mbB

(56) References cited:
- CN-A- 111 796 839
- US-A1- 2011 219 049
- US-A1- 2016 013 944
- LABARGE RALPH ET AL: "An automated system for rapid and secure device sanitization", COMPUTERS & SECURITY, ELSEVIER SCIENCE PUBLISHERS. AMSTERDAM, NL, vol. 42, 6 February 2014 (2014-02-06), pages 77 - 91, XP028602001, ISSN: 0167-4048, DOI: 10.1016/J.COSE.2014.01.008

## Description

### BACKGROUND

The present disclosure relates generally to industrial automation components having memory. More specifically, the present disclosure relates to purging the memory of an industrial automation component so the industrial automation component can be repurposed.

Industrial automation systems may be used to provide automated control of one or more actuators. Specifically, a controller may receive power from a power source and output a conditioned power signal to an actuator to control movement of the actuator. One or more components of an industrial automation system may be equipped with memory. Some entities (e.g., government, military, government/military contractors, private sector enterprises, etc.) may enforce policies against repurposing devices that contain memory because sensitive data may have been stored in memory and may be recoverable from the memory. Accordingly, many such entities destroy devices with memory when they are no longer employed in an application and purchase new devices for new applications instead of repurposing the previously used devices. This can be cost, resource, and materially intensive, and creates more electronic waste. Accordingly, it may be desirable to develop techniques for purging the memory of devices such that devices can be repurposed without the risk of previously stored data being recoverable.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.
CN 111 796 839 A relates to a method and a device for managing a controller program. The method comprises the following steps: after offline detection is performed on the basis of an offline detection EOL program provided by a hardware provider, erasing the EOL program through a first BootLoader program provided by the hardware provider, wherein the first BootLoader program and the EOL program are programmed into a controller nonvolatile memory at a bare board stage; the method comprises the steps that a second BootLoader program and an application file provided by a product supplier are written into a nonvolatile memory through a first BootLoader program; and storing a preset erasing code into a preset memory through the first BootLoader program, and executing an erasing operation on the first BootLoader program through the erasing code so as to ensure that no hardware provider program residue exists in the controller.
US 2011/219049 A1 relates to a system for permanent data deletion. The file deletion system consists of a permanent deletion unit, an analysis module, a database of rules for forming deletion algorithm and an algorithm forming unit. A file to be deleted is passed into the system and the system permanently deletes the file. The system dynamically forms the deletion algorithm based on algorithm forming rules. The rules are selected from the database according to file parameters and user criteria. The file parameters are determined by the analysis module. A user has an access to algorithm forming rules and can edit the rules. Algorithm forming rules can be based on an arbitrary number of complex conditions.
Ralph Labarge et al: "An automated system for rapid and secure device sanitization", Computer & Security, Elsevier Science Publishers, Amsterdam, NL, February 6, 2014, vol. 42, pages 77-91, relates to an automated system for rapid and secure device sanitization. Public and private organizations face the challenges of protecting their networks from cyber-attacks, while reducing the amount of time and money spent on Information Technology. Organizations can reduce their expenditures by reusing server, switch and router hardware, but they must use reliable and efficient methods of sanitizing these devices before they can be redeployed. The sanitization process removes proprietary, sensitive or classified data, as well as persistent malware from a device prior to reuse.
US 2016/013944 A1 relates to systems and methods for performing data sanitization at a data storage device (DSD). In an example, a controller may direct a memory device to sanitize data by securely erasing the data, generate an attestation confirming that the data was successfully sanitized, and sign the attestation using an authentication key to create a signed attestation. In another example, a circuit may direct a memory device to sanitize data based on the data sanitization instruction, generate a sanitization confirmation indicating that the data was successfully sanitized, and provide the sanitization confirmation including a first thumbprint and a second thumbprint to another device. Generating the sanitization confirmation may include processing a first storage encryption key to produce the first thumbprint, directing the memory device to obliterate the first storage encryption key, and processing a second storage encryption key to produce the second thumbprint.

### BRIEF DESCRIPTION

It is the object of the present invention to provide an improved method and system for purging a non-volatile memory of a device like an industrial automation component.
This object is solved by the subject matter of the independent claims.
Preferred embodiments are defined by the dependent claims.

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, an industrial automation component includes a processor, a volatile memory, and a non-volatile memory. The non-volatile memory is accessible by the processor and stores instructions that, when executed by the processor, cause the processor to receive a command to perform a memory purge, retrieve code of a purging firmware package from the non-volatile memory, store the code in the volatile memory, execute the code from volatile memory, thereby causing the processor to purge the non-volatile memory, and cycle power to the industrial automation component, wherein cycling the power comprises purging the volatile memory.

In another embodiment, an industrial automation component includes a processor, a volatile memory, and a non-volatile memory. The non-volatile memory is accessible by the processor and stores instructions that, when executed by the processor, cause the processor to receive a command to perform a memory purge from a device communicatively coupled to the industrial automation component via a network, store code of a purging firmware package in the volatile memory, execute the code from volatile memory, thereby causing the processor to purge the non-volatile memory, and cycle power to the industrial automation component, wherein cycling the power comprises purging the volatile memory.

In another embodiment, a method of purging a non-volatile memory of an industrial automation component comprises retrieving code of a purging firmware package from the non-volatile memory, storing the code in the volatile memory, executing the code from volatile memory, thereby causing the processor to purge the non-volatile memory, and cycling power to the industrial automation component, wherein cycling the power comprises purging the volatile memory.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### DRAWINGS

These and other features, aspects, and advantages of the present embodiments will become better understood when the following detailed description is read with reference to the accompanying drawings in which like characters represent like parts throughout the drawings, wherein:
FIG. 1 illustrates a schematic view of an industrial automation system, including a controller, a computing device, and a remote server, in accordance with embodiments presented herein;
FIG. 2 illustrates a block diagram of example components that could be used as the controller, the computing device, and/or the remote server of FIG. 1, in accordance with embodiments presented herein;
FIG. 3 illustrates a schematic of a system for providing software and/or firmware updates to the controller of FIG. 1, in accordance with embodiments presented herein;
FIG. 4 illustrates a swim lane diagram of communication between a device (e.g., the controller and/or the computing device) and the remote server of FIG. 4, in accordance with aspects of the present disclosure;
FIG. 5 illustrates a flow chart of a process for purging a memory of the device of FIG. 4, in accordance with aspects of the present disclosure;
FIG. 6A-6F illustrate example patterns for overwriting addressable locations in non-volatile memory during the purge shown in FIG. 5, in accordance with aspects of the present disclosure;
FIG. 7 illustrates a flow chart of a process for purging a memory of the controller or the computing device of FIG. 3 by executing a locally stored firmware package, in accordance with aspects of the present disclosure;
FIG. 8 illustrates a flow chart of a process for remotely purging a memory of the device of FIG. 4, in accordance with aspects of the present disclosure; and
FIG. 9 illustrates a flow chart of a process for purging a memory of the device of FIG. 4 and generating a purge report, in accordance with aspects of the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure includes techniques for purging memory of devices such that data previously stored in memory that cannot be recovered using various laboratory techniques, thus allowing memory-containing devices to be repurposed for another application rather than being destroyed. Specifically, the memory may be purged via a self-deleting firmware package. The firmware package may be stored in non-volatile memory of the device. The firmware package may be received from another device via a wired or wireless network connection, received via removable media (e.g., SD card, USB drive, optical disc, etc.), or in any other suitable manner. The firmware package may be copied to volatile memory and executed by a processor to perform a purging process. This may include, for example, overwriting some or all of the addressable locations of the memory a number of times using specific sequences of patterns of 1s and 0s, such that data stored in the memory before the purge process was started cannot be recovered by various laboratory techniques.

In some embodiments, inputs may be provided authorizing the memory purge in case that the firmware package is received from a different device. In some embodiments, the entirety of the non-volatile memory and volatile memory of the device may be purged. In other embodiments, portions (e.g., less than the whole) of the non-volatile memory of the device used by specific applications having a sensitivity level above a threshold level may be purged. After the purge of the non-volatile memory is complete, power to the device is cycled, thereby clearing the volatile memory. At such a point, the non-volatile memory and volatile memory of the device have been purged.

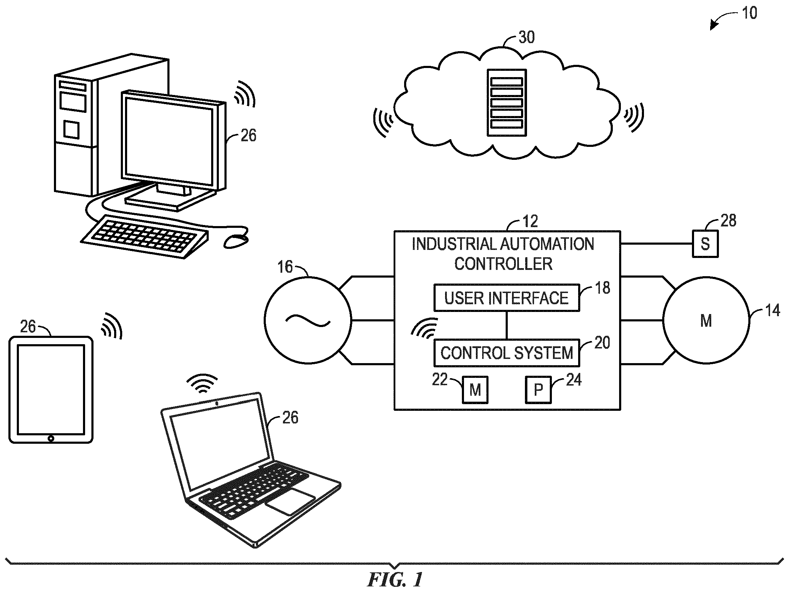

With this in mind, in some embodiments, the device may receive and execute a baseline software and/or firmware package that returns the device to its original factory settings. In some embodiments, the device may generate and display a hash value or some other visualization indicating that the device has been purged. In other embodiments, the device may generate a report indicating that the device has been purged, and the report may include the generated hash value or other suitable representative visualization. The report may or may not be encrypted. If the report is encrypted, the report may be encrypted using asymmetric cryptography. That is, the report may be encrypted using a public key. In such an embodiment, a customer would decrypt the report using a provided private key. However, in some embodiments, the use of public and private keys may be reversed such that the report is encrypted using a private key and decrypted using a public key. Use of these techniques allows an entity to purge memory of memory-containing devices such that data previously stored in memory of the device pre-purge cannot be recovered using various laboratory techniques (e.g., live Compact Discs (CD), live Digital Video Disc (DVD), magnetic force microscopy, reference recovery, cross-drive analysis, file carving, and so forth), such that devices can be repurposed for new applications instead of being destroyed. Additional details with regard to purging the memory of various devices in accordance with the techniques described above will be provided below with reference to FIGS. 1-9.

By way of introduction, FIG. 1 is a schematic view of an example industrial automation system 10 in which the embodiments described herein may be implemented. As shown, the industrial automation system 10 includes a controller 12 and an actuator 14 (e.g., a motor). The industrial automation system 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger industrial automation system 10. In the instant embodiment, the controller 12 includes a user interface 18, such as a human machine interface (HMI), and a control system 20, which may include a memory 22 and a processor 24. The controller 12 may include a cabinet or some other enclosure for housing various components of the industrial automation system 10, such as a motor starter, a disconnect switch, etc.

The control system 20 may be programmed (e.g., via computer readable code or instructions stored on the memory 22 and executable by the processor 24) to provide signals for controlling the motor 14. In certain embodiments, the control system 20 may be programmed according to a specific configuration desired for a particular application. For example, the control system 20 may be programmed to respond to external inputs, such as reference signals, alarms, command/status signals, etc. The external inputs may originate from one or more relays or other electronic devices. The programming of the control system 20 may be accomplished through software configuration or firmware code that may be loaded onto the internal memory 22 of the control system 20 (e.g., via a locally or remotely located computing device 26) or programmed via the user interface 18 of the controller 12. The firmware of the control system 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the industrial automation system 10. With feedback data from the sensors 28, the control system 20 may keep detailed track of the various conditions under which the industrial automation system 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The computing device 26 may send a project to the controller 12 for execution. Execution of the industrial automation project causes the controller 12 to control components (e.g., motor 14) within the industrial automation system 10 through performance of one or more tasks and/or processes. In some applications, the controller 12 may be communicatively positioned behind a firewall, such that the controller 12 does not have communication access outside a local network and is not in communication with any devices outside the firewall, other than the computing device 26. As previously discussed, the controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 is operated by the manufacturer of the controller 12. However, in other embodiments, the cloud server 30 may be operated by a seller of the controller 12, a service provider, operator of the controller 12, owner of the controller 12, etc. The cloud server 30 may be used to help customers create and/or modify projects, to help troubleshoot any problems that may arise with the controller 12, or to provide other services (e.g., project analysis, enabling, restricting capabilities of the controller 12, data analysis, controller firmware updates, etc.). The remote/cloud server 30 may be one or more servers operated by the manufacturer, seller, service provider, operator, or owner of the controller 12. The remote/cloud server 30 may be disposed at a facility owned and/or operated by the manufacturer, seller, service provider, operator, or owner of the controller 12. In other embodiments, the remote/cloud server 30 may be disposed in a datacenter in which the manufacturer, seller, service provider, operator, or owner of the controller 12 owns or rents server space. In further embodiments, the remote/cloud server 30 may include multiple servers operating in one or more data center to provide a cloud computing environment.

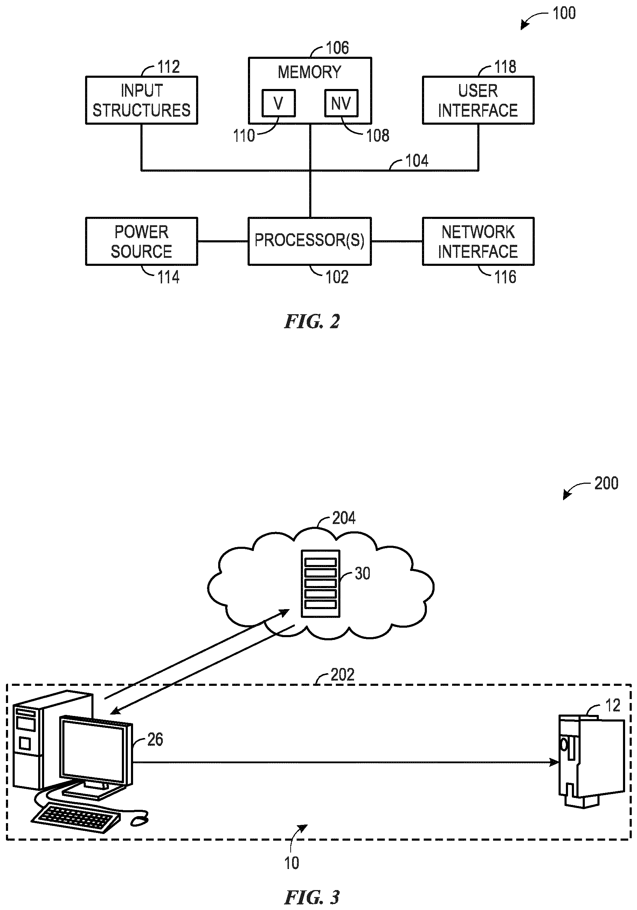

FIG. 2 illustrates a block diagram of example components of a computing device 100 that could be used as the computing device 26, the cloud/remote server 30, the controller 12, or some other device within the system 10 shown in FIG. 1. As used herein, a computing device 100 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 100 may include various hardware components, such as one or more processors 102, one or more busses 104, memory 106, input structures 112, a power source 114, a network interface 116, a user interface 118, and/or other computer components useful in performing the functions described herein.

The one or more processors 102 may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. As shown in FIG. 2, the memory 106 may include non-volatile memory 108 and volatile memory 110. The non-volatile memory 108 is static, and may store data, program instructions, etc. Data stored in non-volatile memory 108 persists when the computing device 100 is powered down. The non-volatile memory 108 may include, for example, Read Only Memory (ROM), Hard Disk Drive (HDD), flash memory, including NAND flash and Solid-State Drives (SSDs), floppy disks, optical discs, magnetic tape, etc. The volatile memory 110 may store data and program instructions that are used by the processor 102 in real time. The volatile memory 110 fetches and stores data at high speed and is cleared when the computing device 100 is powered down. The volatile memory 110 may include, for example, Random Access Memory (RAM), including Dynamic Random Access Memory (DRAM) and Static Random Access Memory (SRAM), cache memory, etc. Although shown for convenience as a single block in FIG. 2, the memory 106 may encompass various discrete media in the same or different physical locations. The one or more processors 102 may access data in the memory 106 via one or more busses 104.

The input structures 112 may allow a user to input data and/or commands to the device 100 and may include mice, touchpads, touchscreens, keyboards, controllers, and so forth. The power source 114 can be any suitable source for providing power to the various components of the computing device 100, including line and battery power. In the depicted example, the device 100 includes a network interface 116. Such a network interface 116 may allow communication with other devices on a network using one or more communication protocols. In the depicted example, the device 100 includes a user interface 118, such as a display that may display images or data provided by the one or more processors 102. The user interface 118 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

Returning to FIG. 1, an enterprise may wish to repurpose the controller 12, one of the computing devices 26, or any other component that contains a memory component 22 for a different application. For example, the enterprise may cease manufacturing a product produced by a production line of which the industrial automation system 10 is a part. Accordingly, the enterprise may wish the repurpose the industrial automation controller 12, or some other component within the industrial automation system 10, into a new industrial automation system 10 that produces a different product. However, if the industrial automation controller 12 was used in a government and/or military application, used in a process related to trade secrets, or otherwise stored information considered to be sensitive or confidential on its memory 22, the enterprise may wish the sanitize the memory 22 of the industrial automation controller 12, such that the sensitive or confidential information once stored on the memory 22 cannot be recovered. Similarly, if the enterprise wishes to transfer a computing device 26, or any other device containing memory, from one employee to another, one facility to another, or otherwise return the computing device to its factory settings for some new use or purpose, the enterprise may wish to sanitize the memory of the computing device 26, such that information previously stored on the memory 22 cannot be recovered. Such memory purges are defined by the "National Institute of Science and Technology (NIST) 800-88 Guidelines for Media Sanitization" published in December 2014. The NIST 800-88 Guidelines set forth three levels of media sanitization with decreasing likelihood of data recoverability-clearing, purging, and destroying.

By way of reference, media is considered cleared when a layperson would be unable to recover data previously stored on the memory. Clearing techniques may include overwriting user-addressable storage space on media with non-sensitive data using the standard read and write commands of the device. In addition, media is considered purged when retrieval of the data previously stored on the memory is infeasible using various laboratory techniques. Purging techniques may include overwriting, block erase, cryptographic erase, sanitize commands that apply media-specific techniques to bypass the abstraction of typical read/write commands, as well as techniques that may render the media unusable, such as incinerating, shredding, disintegrating, degaussing, and pulverizing. Moreover, media is considered destroyed when the media is rendered unusable and retrieval of the data previously stored on the memory is infeasible using various laboratory techniques. Destruction techniques include disintegrating, pulverizing, melting, incinerating, shredding, etc.

With the foregoing in mind, purging memory of various devices such that data previously stored on the memory cannot be recovered by laboratory techniques without rendering the device unusable has been difficult to achieve. Accordingly, rather than purging the memory of devices used in a government and/or military application, used in a process related to trade secrets, or that otherwise stored information considered to be sensitive or confidential, devices have traditionally been destroyed after being used in a single application. Though such practices may have certain advantages, such practices may be wasteful, costly, and resource intensive. Accordingly, the disclosed techniques include using a memory purging firmware package to purge the memory of a device in accordance with the NIST 800-88 Guidelines, while enabling the device to be restored to factory settings and repurposed for another application.

With the preceding in mind, FIG. 3 illustrates a schematic of a system 200 for providing firmware to one of more components (e.g., the industrial automation controller 12, the computing device 26, etc.) of an industrial automation system 10. As shown, the industrial automation system 10 is disposed within a private network 202, which may include a network address translation (NAT). The remote server 30 may be disposed in a public network 204 (e.g., the internet). Devices within the private network 202 may not be reachable by devices within the public network 204, but devices within the public network 204 may be reachable by devices within the private network 202. Accordingly, the computing device 26 may discover and establish a connection with the remote server 30. This may include, for example, transmitting a discovery request to the remote server 30, receiving a location and trust certificate from the remote server 30, requesting a policy and an identity from the remote server 30, and receiving the policy and the identity from the remote server 30. The policy may define various activities performed by the computing device 26, or other devices within the industrial automation system 10, including how often checks for firmware updates are performed.

After a connection is established between the computing device 26 and the remote server 30, the computing device may periodically transmit requests for firmware to the remote server 30 and receive firmware from the remote server 30. In embodiments in which the industrial automation system 10 includes components that are not capable of communicating with the remote server 30, or otherwise prohibited from communicating outside of the private network 202, the computing device 26 may distribute firmware to various devices (e.g., the industrial automation controller 12) within the industrial automation system 10. However, in some embodiments, the industrial automation controller 12, and/or other components of the industrial automation system 10 may be capable of direct communication with the remote server. Accordingly, in such embodiments, the industrial automation controller 12, and/or other components of the industrial automation system 10 may go through the process of establishing a connection with the remote server 30 and requesting and receiving firmware from the remote server 30 individually. However, embodiments are also envisaged in which a first subset of components within the industrial automation system 10 communicate directly with the remote server 30 for firmware, while a second subset of components within the industrial automation system 10 receive firmware from the remote server 30 via the computing device 26.

As will be described in more detail below, the remote server 30 may be used to provide self-deleting memory purge firmware packages to one or more devices (e.g., the industrial automation controller 12) within the industrial automation system 10 that, when implemented, purge the memory of the device and return the device to its factory settings.

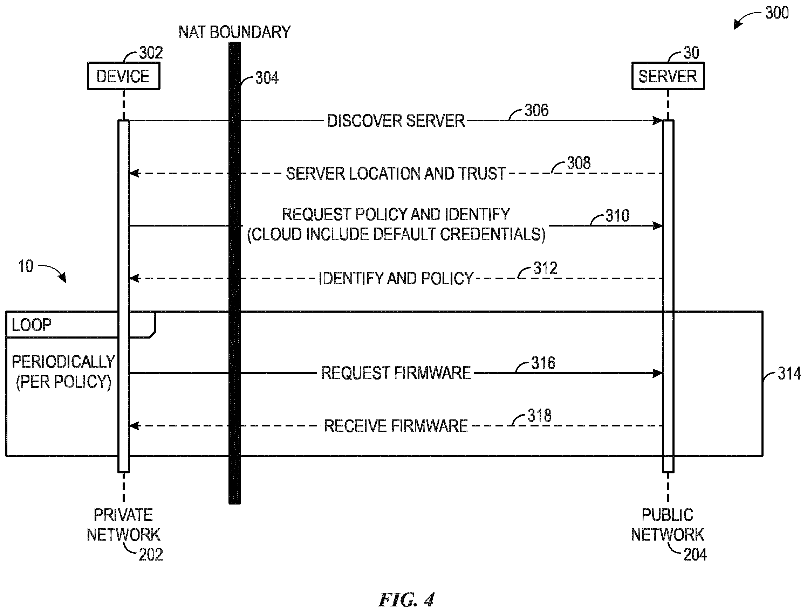

FIG. 4 is a swim lane diagram 300 illustrating communication between a device 302 of the industrial automation system 10 and the remote server 30 for firmware. The device 302 may be any device that includes memory. For example, the device 302 may include the controller 12 shown in FIG. 1 or the computing device 26 shown in FIG. 1. Further, the device 302 may be any other component of the industrial automation system 10 shown in FIG. 1, or any other industrial automation system, that include memory, such as a controller, a motor starter, a Motor Control Center (MCC), a server, a desktop computer, a laptop computer, a tablet, a mobile device, a phone, a wearable, an HMI, input and/or output modules, embedded computers, etc.

As shown, the private network 202 in which the industrial automation system 10 is disposed may include a NAT 304, which may be used to conserve Internet Protocol (IP) addresses utilized by the network. Specifically, the NAT 304 connects the private network 202 to the public network 204 and translates network addresses of devices within the private network 202 into a legal IP address before packets are sent to the remote server 30 in the public network 204. Accordingly, one or more, or all, devices in the private network 202 can share an IP address. The NAT 304 may enable communication between the private network 202 and the public network 204 more secure because the addresses of the devices within the private network 202 are hidden. As such, when an outgoing message passes through the NAT 304, the address of the device 302 is scrubbed from the message and replaced with the IP address assigned to the private network 202. Correspondingly, when an incoming message passes through the NAT 304, IP address assigned to the private network 202 may be replaced with the address of the device 302 and the message routed to the appropriate device 302.

At 306, the device 302 discovers the remote server 30 by transmitting a discovery request to the remote server 30. The discovery request may include, for example, a request for a server location and a trust certificate. At 308, the remote server transmits its server location and trust certificate to the device 302. At 310, the device 302 transmits a request for a policy and an identity to the remote server 30. In some embodiments, the request may include default credentials for the device 302 to establish a connection with the remote server 30. At 312, the remote server 30 provides its identity and a policy to the device 302. The identity identifies the remote server 30 and may include, for example, an IP address, a URL, a Media Access Control (MAC) address, etc. The policy may define one or more operational parameters of the device 302 and/or various activities performed by the device 302, or other devices within the industrial automation system 10, including how often checks for firmware updates are performed. After a connection is established between the device 302 and the remote server 30, the device 302 enters a firmware update loop 314. For example, at 316, the device 302 may periodically transmit requests for firmware to the remote server 30. The frequency of the requests may be determined based on the policy received from the remote server 30. At 318, a firmware update, if an update is available, is transmitted from the remote server 30 to the device 302 and stored in non-volatile memory of the device 302. In some embodiments, the firmware update loop 314 may be used to receive a self-deleting firmware package to purge memory of the device 302.

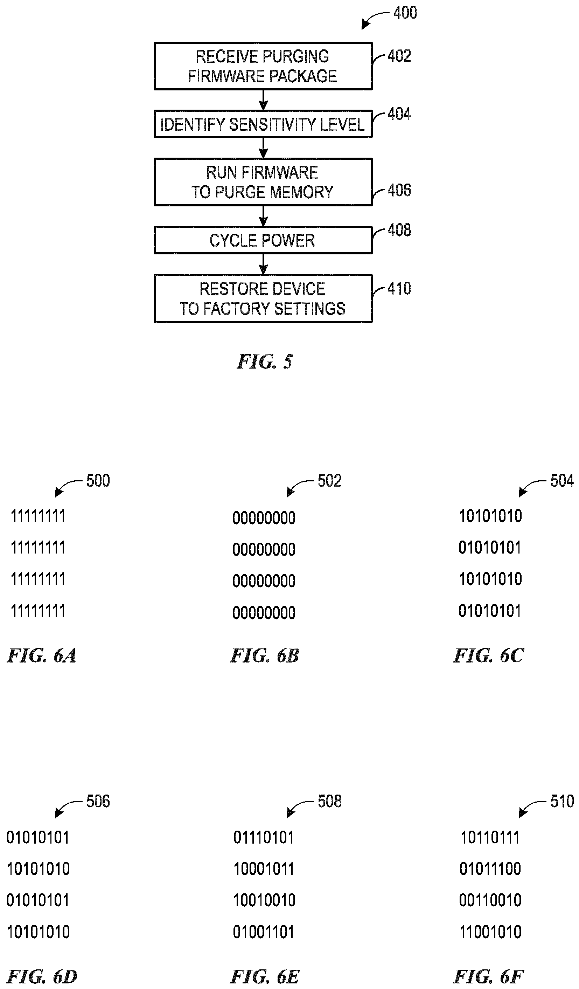

FIG. 5 illustrates a flow chart of a process 400 for implementing a self-deleting memory purge firmware package on a device. Although the following description of the process 400 is described in a particular order and being performed by the device 302, it should be noted that the process 400 may be performed in any suitable order by any suitable component.

At 402, the device 302 may receive the self-deleting memory purge firmware package and store the firmware package in non-volatile memory. In some embodiments, the device 302 may receive the self-deleting memory purge firmware package directly from a remote server, as shown and described with regard to FIG. 4. In other embodiments, the device 302 may receive the self-deleting memory purge firmware package from a computing device within the private network that manages the industrial automation system, as shown and described with regard to FIG. 3. In further embodiments, the device 302 may have the self-deleting memory purge firmware package preloaded in non-volatile memory.

At block 404, the device 302 may identify a sensitivity level associated with the device itself and/or applications running on the device 302. In some embodiments, the sensitivity level may be binary. That is, the device 302 and/or applications running on the device 302 may be considered sensitive or not sensitive. In other embodiments, the sensitivity level may have multiple degrees of sensitivity. Accordingly, the varying degrees of sensitivity may correspond to the degrees of media sanitization set forth in the NIST 800-88 Guidelines mentioned above. However, it should be understood that the scale of sensitivity levels may or may not have three levels that correspond directly to the three degrees of media sanitization set forth in the NIST 800-88 Guidelines. In some embodiments, the sensitivity level for the device 302 and/or applications running on the device 302 may be set by the user. In other embodiments, the sensitivity level for the device 302 and/or applications running on the device 302 may be outside of the control of the user and set by a network administrator or automatically set based on how the device 302 is being used, the application running on the device 302, how the applications running on the device 302 are being used, etc. In some embodiments, the sensitivity level of a device or an application may be determined based on the data being used or stored. For example, customer data, vendor data, data related to trade secrets, data related to processes or equipment inventories, data that is restricted or classified by the government, information classified as top secret, information classified as secret, information classified as confidential, information related to human resources for an organization, information related to medical history of one or more people, information related to military operations, information produced by or for government agencies or organizations, information related to law enforcement, information related to government intelligence, and so forth may trigger a device or an application being given a specific sensitivity level.

At block 406, the device 302 may execute the self-deleting memory purge firmware package to purge the memory based on the sensitivity level identified in block 404. Executing the self-deleting memory purge firmware package may include retrieving program code from the non-volatile memory, writing the program code to the volatile memory, and executing the program code stored in the volatile memory to purge the non-volatile memory. The purging process may involve a specific sequence of overwriting addressable locations in the non-volatile memory a sufficient number of times (e.g., 1, 2, 3, 4, 5, 6, 7, 8, 9, 10, or more times) that retrieval of the data previously stored on the non-volatile memory is infeasible using laboratory techniques and the non-volatile memory is considered purged according to the NIST 800-88 Guidelines. One example sequence of overwriting the non-volatile memory is discussed in more detail below with regard to FIG. 6. In some embodiments, the entirety of the non-volatile memory may be purged. For example, if the entire device 302 is classified as sensitive or if one or more applications running on the device 302 meet or exceed a threshold level of sensitivity, the entire non-volatile memory of the device 302 may be purged. Alternatively, if the sensitivity is limited to a portion of the memory or a subset of memory units within the non-volatile memory, and the sensitivity level does not meet or exceed a threshold level of sensitivity, only a portion of the non-volatile memory may be purged. At this point, the self-deleting memory purge firmware package, as well as any other data stored in non-volatile memory has been erased from the non-volatile memory such that it cannot be recovered.

At block 408, the device 302 may execute a power cycle by disconnecting from a power source and reconnecting to the same power source. In some embodiments, the device 302 may cycle power to itself (e.g., by automatically shutting itself down, physically disconnecting itself from a power source, etc.). In other embodiments, the device 302 may cycle the power in response to an input received from the user. Powering the device 302 down includes clearing the volatile memory, such that the instructions related to the self-deleting memory purge firmware package, as well as any other data stored on the volatile memory have been completely erased from the memory and cannot be recovered.

At block 410, the device 302 may restore itself to its factory settings. In some embodiments, the device 302 may receive a baseline software/firmware package from a remote server, as shown and described with regard to FIG. 4, or from a computing device within the private network that manages the industrial automation system, as shown and described with regard to FIG. 3. The baseline software/firmware package may include software or firmware with which the device comes "out of the box" pre-installed.

FIGS. 6A-6F illustrate an embodiment of a sequence of overwriting addressable locations in the non-volatile memory during the memory purge. As previously discussed, the memory purging process may include a specific sequence of overwriting addressable locations in the non-volatile memory a threshold number of times that retrieval of the data previously stored on the non-volatile memory is infeasible using laboratory techniques and the non-volatile memory is considered purged according to the NIST 800-88 Guidelines. For example, FIG. 6A illustrates overwriting addressable locations in the non-volatile memory with a pattern 500 entirely of 1s. FIG. 6B illustrates overwriting addressable locations in the non-volatile memory with a pattern 502 consisting entirely of 0s. FIG. 6C illustrates overwriting addressable locations in the non-volatile memory with a pattern 504 consisting of alternating 1s and 0s. FIG. 6D illustrates overwriting addressable locations in the non-volatile memory with an inverted pattern 506 consisting of alternating 1s and 0s relative to the pattern 504 shown in FIG. 6C. FIG. 6E illustrates overwriting addressable locations in the non-volatile memory with a first randomly generated pattern 508 consisting of 1s and 0s. FIG. 6F illustrates overwriting addressable locations in the non-volatile memory with a second randomly generated pattern 510 consisting of 1s and 0s. It should be understood, however, that the specific randomly generated patterns of 1s and 0s shown in FIGS. 6E and 6F are merely examples and that other randomly generated patterns of 1s and 0s are also envisaged.

In some embodiments, the memory purging process may include overwriting addressable locations in the non-volatile memory according to the specific sequence shown in FIGS. 6A-6F. However, embodiments in which the sequence of overwriting addressable locations in the non-volatile memory occurs in a different order, includes few steps, additional steps, and/or repeats steps are also envisaged.

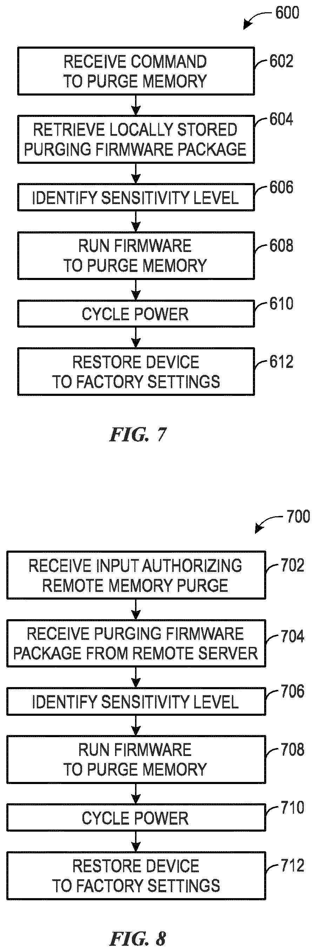

FIG. 7 illustrates a flow chart of an embodiment of a process 600 for implementing a self-deleting memory purge firmware package that has been locally stored on a device. Although the following description of the process 600 is described in a particular order and being performed by the device 302, it should be noted that the process 600 may be performed in any suitable order by any suitable component.

At 602, the device 302 receives a command to purge the memory. The command may be received via a user interface of the device, which may include a display with buttons or a touch screen. In other embodiments, the command may be received via a hardware switch or other physical input device. For example, a user may press and hold a button, such as a reset button, actuate the button according to some sequence (e.g., press button a specific number of times) or throw a reset switch. In further embodiments, the device 302 may receive the command via some other remote device, such as a Human Machine Interface (HMI), a mobile device, a tablet, etc.

At block 604, the device 302 retrieves the self-deleting memory purge firmware package from non-volatile memory and copies the self-deleting memory purge firmware package to volatile memory for execution. In some embodiments, the device 302 may receive the self-deleting memory purge firmware package from a remote server, as shown and described with regard to FIG. 4, or from a computing device within the private network that manages the industrial automation system, as shown and described with regard to FIG. 3. In other embodiments, the device 302 may receive the self-deleting memory purge firmware package from removable media (e.g., Secure Digital (SD) card, a Universal Serial Bus (USB) drive, optical disc, floppy disk), or via a short range communication protocol (e.g., Bluetooth, near field communication, etc.) from a nearby device. In further embodiments, the device may have the self-deleting memory purge firmware package preloaded in non-volatile memory.

At block 606, the device 302 identifies a sensitivity level associated with the device 302 and/or applications running on the device 302. In some embodiments, the sensitivity level may be binary (e.g., sensitive or not sensitive). In other embodiments, the sensitivity level may have multiple degrees of sensitivity, which may or may not correspond to the degrees of media sanitization set forth in the NIST 800-88 Guidelines. The sensitivity level for the device and/or applications running on the device may be set by the user or may be outside of the control of the user (e.g., set by a network administrator or automatically set based on how the device is being used, the application running on the device, how the applications running on the device are being used, etc.).

At block 608, the device 302 executes the self-deleting memory purge firmware package to purge the memory based on the sensitivity level identified in block 606. Executing the self-deleting memory purge firmware package may include executing the program code stored in the volatile memory to purge the non-volatile memory. The purging process may involve a specific sequence of overwriting addressable locations in the non-volatile memory a threshold number of times (e.g., 3) that the data previously stored on the non-volatile memory cannot be retrieved using laboratory techniques and the non-volatile memory is considered purged according to the NIST 800-88 Guidelines. The specific sequence of overwriting the non-volatile memory was discussed in more detail with regard to FIG. 6. At this point, the self-deleting memory purge firmware package, as well as any other data stored in non-volatile memory has been erased from the non-volatile memory such that it cannot be recovered.

At block 610, the device 302 may execute a power cycle by disconnecting from a power source and reconnecting to the same power source. Powering the device down includes clearing the volatile memory such that the instructions related to the self-deleting memory purge firmware package, as well as any other data stored on the volatile memory have been completely erased from the memory such that they cannot be recovered. At block 612, the device 302 may restore itself to its factory settings. In some embodiments, the device may receive a baseline software/firmware package from a remote server, as shown and described with regard to FIG. 4, or from a computing device within the private network that manages the industrial automation system, as shown and described with regard to FIG. 3. The baseline software/firmware package may include software or firmware with which the device comes "out of the box" pre-installed.

FIG. 8 illustrates a flow chart of an embodiment of a process 700 for implementing a self-deleting memory purge firmware package received from a remote device. Although the following description of the process 700 is described in a particular order and being performed by the device 302, it should be noted that the process 700 may be performed in any suitable order by any suitable component.

At 702, the device 302 receives an input that authorizes a remote purge of the memory (e.g., "remote decommission"). The device 302 may receive the input via a user interface of the device, via a hardware switch, or other some physical input device. The input may include, for example, actuating an "allow remote decommission" switch, providing a Personal Identification Number (PIN), an authorization code, a password, etc.

At 704, the device 302 receives the self-deleting memory purge firmware package and stores the self-deleting memory purge firmware package in memory. In some embodiments, the device 302 receives the self-deleting memory purge firmware package directly from a remote server, as shown and described with regard to FIG. 4. In other embodiments, the device 302 receives the self-deleting memory purge firmware package from a computing device within the private network that manages the industrial automation system, as shown and described with regard to FIG. 3. If not already in volatile memory, the device 302 retrieves the self-deleting memory purge firmware package from non-volatile memory and copies the self-deleting memory purge firmware package to volatile memory for execution. In some embodiments, the self-deleting memory purge firmware package may already be stored non-volatile memory. In such an embodiment, the device may receive a command to execute the self-deleting memory purge firmware package already stored in memory from the remote device.

In some embodiments, the device 302 may execute the self-deleting memory purge firmware package without receiving an input at the device authorizing the memory purge. For example, a device may be recognized as compromised and the memory remotely purged to protect data stored in memory. Recognizing that the device is compromised may include detecting an open cabinet/case, using a beacon to determine that the device has been moved outside of an authorized area, using Global Positioning System (GPS) to determine that the device has been moved outside of the authorized area, determining that the device has been hacked or otherwise remotely accessed by an unauthorized party, etc. In such embodiments, the self-deleting memory purge firmware package may be used to purge the memory of the device without authorization being provided at the device's physical location.

At block 706, the device 302 identifies a sensitivity level associated with the device and/or applications running on the device. The sensitivity level may be binary (e.g., sensitive or not sensitive), or may have multiple degrees of sensitivity, which may or may not correspond to the degrees of media sanitization set forth in the NIST 800-88 Guidelines. The sensitivity level for the device and/or applications running on the device may be set by the user or may be outside of the control of the user (e.g., set by a network administrator or automatically set based on how the device is being used, the application running on the device, how the applications running on the device are being used, etc.).

At block 708, the device 302 executes the self-deleting memory purge firmware package to purge the memory based on the sensitivity level identified in block 704. Executing the self-deleting memory purge firmware package may include executing the program code stored in the volatile memory to purge the non-volatile memory. The purging process may involve a specific sequence of overwriting addressable locations in the non-volatile memory a threshold number of times that the data previously stored on the non-volatile memory cannot be retrieved using certain laboratory techniques and the non-volatile memory is considered purged according to the NIST 800-88 Guidelines. The specific sequence of overwriting the non-volatile memory was discussed in more detail with regard to FIG. 6. At this point, the self-deleting memory purge firmware package, as well as any other data stored in non-volatile memory has been erased from the non-volatile memory such that it cannot be recovered.

At block 710 power to the device is cycled by powering the device down and then powering the device back up. Powering the device down includes clearing the volatile memory such that the instructions related to the self-deleting memory purge firmware package, as well as any other data stored on the volatile memory have been completely erased from the memory such that they cannot be recovered. At block 712, the device is restored to its factory settings. In some embodiments, the device may receive a baseline software/firmware package from a remote server, as shown and described with regard to FIG. 4, or from a computing device within the private network that manages the industrial automation system, as shown and described with regard to FIG. 3. The baseline software/firmware package may include software or firmware with which the device comes "out of the box" pre-installed.

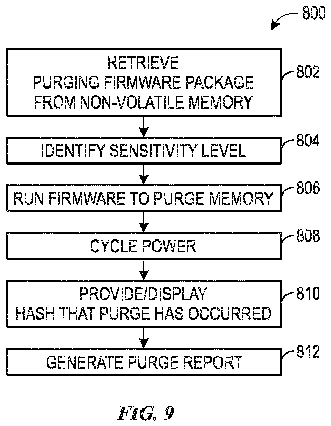

FIG. 9 illustrates a flow chart of an embodiment of a process 800 for implementing a self-deleting memory purge firmware package and generating a purge report. Although the following description of the process 800 is described in a particular order and being performed by the device 302, it should be noted that the process 800 may be performed in any suitable order by any suitable component.

At 802, the device 302 retrieves the from non-volatile memory and copies the self-deleting memory purge firmware package to volatile memory for execution. In some embodiments, the device 302 may receive the self-deleting memory purge firmware package from a remote server, as shown and described with regard to FIG. 4, or from a computing device within the private network that manages the industrial automation system, as shown and described with regard to FIG. 3. In other embodiments, the device may have the self-deleting memory purge firmware package preloaded in non-volatile memory.

At block 804, the device 302 identifies a sensitivity level associated with the device and/or applications running on the device. The sensitivity level may be binary (e.g., sensitive or not sensitive), or may have multiple degrees of sensitivity, which may or may not correspond to the degrees of media sanitization set forth in the NIST 800-88 Guidelines. The sensitivity level for the device and/or applications running on the device may be set by the user or may be outside of the control of the user (e.g., set by a network administrator or automatically set based on how the device is being used, the application running on the device, how the applications running on the device are being used, etc.).

At block 806, the device 302 executes the self-deleting memory purge firmware package to purge the memory based on the sensitivity level identified in block 804. Executing the self-deleting memory purge firmware package may include executing the program code stored in the volatile memory to purge the non-volatile memory. The purging process may involve a specific sequence of overwriting addressable locations in the non-volatile memory a threshold number of times that the data previously stored on the non-volatile memory cannot be retrieved using various laboratory techniques and the non-volatile memory is considered purged according to the NIST 800-88 Guidelines. The specific sequence of overwriting the non-volatile memory was discussed in more detail with regard to FIG. 6. At this point, the self-deleting memory purge firmware package, as well as any other data stored in non-volatile memory has been erased from the non-volatile memory such that it cannot be recovered.

At block 808, the device 302 may execute a power cycle by disconnecting from a power source and reconnecting to the same power source. Powering the device down includes clearing the volatile memory such that the instructions related to the self-deleting memory purge firmware package, as well as any other data stored on the volatile memory have been completely erased from the memory such that they cannot be recovered. At this point, the device is restored to its factory settings. In some embodiments, the device may receive a baseline software/firmware package from a remote server, as shown and described with regard to FIG. 4, or from a computing device within the private network that manages the industrial automation system, as shown and described with regard to FIG. 3. The baseline software/firmware package may include software or firmware with which the device comes "out of the box" pre-installed.

At 810, the device may provide and/or display a hash value indicating that the memory purge has been successfully completed. In some embodiments, the hash value may be written to a cache, or some other portion of the memory. As described in more detail below, the generated hash value may be included in a purge report or used to sign a purge report to verify that the purge has been completed. The hash value may be a numeric value of a fixed length that uniquely identifies data. Generally, hash values can represent large amounts of data in significantly smaller numeric values. Accordingly, hash values are frequently used as or in conjunction with digital signatures. The hash value may be generated via a hash function or hash algorithm that utilizes managed hash classes to hash (i.e., generate hash values for) an array of bytes or a managed stream object. Hash values may also be used for verifying the integrity of data that may have been transmitted through insecure channels or may have otherwise been altered. A hash value of received data can be compared to the hash value of data before transmission to determine whether the data was altered. For example, data may be hashed at a certain time and the hash value protected in some way (e.g., encryption). The data can then be hashed again and compared to the protected value to assess the integrity of the data. If the hash values match, the data has not been altered. If the values do not match, the data has been corrupted. The hash value may be encrypted (e.g., via asymmetric cryptography using a public/private key scheme) or otherwise kept secret from untrusted parties.

At 812, the device 302 may generate a purge report to confirm that the memory purge has been successfully completed. The purge report may be a text file, a Portable Document File (PDF), or a file in some other format. The purge report may indicate the portions of memory that were purged, the time at which the purge took place, one or more users or devices that requested and/or approved the purge, etc. In some embodiments, the purge report may be signed with the hash value to verify the authenticity of the purge report and the contents therein. For security purposes, the hash value may be encrypted using a public key. The public key may be unique to the device, the manufacturer of the device, the owner of the device, the operator of the device, etc. A private key may then be used to decrypt the encrypted hash value and verify the report signature. In other embodiments, the report may be signed using a private key. In such an embodiment, the signature may be verified using a public key.

The present disclosure includes techniques for purging memory of devices such that data previously stored in memory cannot be recovered using various laboratory techniques, thus allowing memory-containing devices to be repurposed for another application rather than being destroyed. Specifically, the memory may be purged via a self-deleting firmware package. The firmware package may be stored in non-volatile memory of the device, received from another device via a wired or wireless network connection, received via removable media (e.g., SD card, USB drive, optical disc, etc.), or some other way. The firmware package may be copied to volatile memory and executed by a processor to perform a purging process. This may include, for example, overwriting some or all of the addressable locations of the memory a number of times using specific sequences of patterns of 1s and 0s such that data stored in the memory before the purge process was started cannot be recovered by certain laboratory techniques.

In some embodiments, inputs may be provided authorizing the memory purge if the firmware package is received from a different device. In some embodiments the entirety of the non-volatile memory and volatile memory of the device are purged. In other embodiments, only portions of the non-volatile memory of the device used by specific applications having a sensitivity level above a threshold level are purged. Once the purge of the non-volatile memory is complete, power to the device is cycled, which clears the volatile memory. At such a point, the non-volatile memory and volatile memory of the device have been purged. In some embodiments, the device may receive and execute a baseline software and/or firmware package that returns the device to its original factory settings. In some embodiments, the device may generate and display a hash value indicating that the device has been purged. In other embodiments, the device may generate a report indicating that the device has been purged, which may include the generated hash value. The report may or may not be encrypted. If the report is encrypted, the report may be encrypted using a public key. In such an embodiment, a customer would decrypt the report using a provided private key. In other embodiments, the report may be signed using a private key. In such an embodiment, the signature may be verified using a public key.

Use of the disclosed techniques allows an entity to purge memory of memory-containing devices such that data previously stored in memory of the device pre-purge cannot be recovered using certain laboratory techniques. Having the capability to purge devices without previously stored data being recovery allows an entity to repurpose a device from one application to another rather than destroying the device and purchasing a new device. Repurposing devices rather than destroying and replacing devices is less costly, less resource intensive, and results in less material waste.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the scope of this disclosure.

The techniques presented and claimed herein are referenced and applied to material objects and concrete examples of a practical nature that demonstrably improve the present technical field and, as such, are not abstract, intangible or purely theoretical.

## Claims

1. A non-transitory computer readable medium storing instructions that, when executed by a processor (24, 102) of an industrial automation component, cause the processor to perform operations comprising:
receiving (602), via the processor, a command to perform a purge of memory of a device (302);
retrieving (604), from non-volatile memory (108), via the processor, code of a purging firmware package;
storing, in volatile memory (110), via the processor, the code;
determining (606) that one or more software applications running on the industrial automation component have respective sensitivity levels above a threshold;
executing (608), via the processor, the code from the volatile memory, thereby causing the processor to purge the non-volatile memory, including overwriting a subset of the addressable locations of the non-volatile memory, wherein the subset of the addressable locations of the non-volatile memory corresponds to portions of the non-volatile memory used by the one or more software applications determined to have sensitivity levels above the threshold; and
cycling power (610) to the industrial automation component, wherein cycling the power comprises purging the volatile memory.

2. The computer readable medium of claim 1, wherein the instructions that cause the processor to purge the non-volatile memory comprises overwriting each of the addressable locations of the non-volatile memory, or a subset of the addressable locations of the non-volatile memory with:
a first pattern consisting of 1s;
a second pattern consisting of 0s; and
a third pattern consisting of alternating 1s and 0s.

3. The computer readable medium of claim 2, the instructions the cause that processor to purge the non-volatile memory comprises overwriting each of the addressable locations of the non-volatile memory, or the subset of the addressable locations of the non-volatile memory with:
a fourth pattern consisting of alternating 1s and 0s, wherein the fourth pattern is inverted relative to the third pattern; and
a fifth randomly generated pattern consisting of 1s and 0s.

4. The computer readable medium of one of claims 1 to 3, the operations comprising receiving (400) the purging firmware package via a network connection.

5. The computer readable medium of one of claims 1 to 4, the operations comprising at least one of:
retrieving the code from a removable media, wherein the removable media comprises a secure digital, SD, card, a Universal Serial Bus, USB, drive, an optical disc, or a floppy disk; and
receiving a baseline software package, a baseline firmware package, or a combination thereof, to return the industrial automation component to a factory setting.

6. The computer readable medium of one of claims 1 to 5, the operations comprising:
identifying a sensitivity level of the industrial automation component; and
overwriting each of the addressable locations of the non-volatile memory based on the sensitivity level of the industrial automation component.

7. An industrial automation component, comprising:
a processor (24, 102);
a volatile memory (110), accessible by the processor; and
a non-volatile memory (108), comprising a plurality of addressable locations, accessible by the processor, and storing instructions that, when executed by the processor, cause the processor to perform operations comprising:
receiving, via the processor, from an input device communicatively coupled to the industrial automation component via a network, a command to perform a purge of memory of the industrial automation component (302);
retrieving, from the non-volatile memory, via the processor, code of a purging firmware package;
storing, in the volatile memory, via the processor, the code of the purging firmware package;
determining that one or more software applications running on the industrial automation component have respective sensitivity levels above a threshold;
executing, via the processor, the code from the volatile memory, thereby causing the processor to purge the non-volatile memory, including overwriting a subset of the addressable locations of the non-volatile memory, wherein the subset of the addressable locations of the non-volatile memory corresponds to portions of the non-volatile memory used by the one or more software applications determined to have sensitivity levels above the threshold; and
cycling power to the industrial automation component, wherein cycling the power comprises purging the volatile memory.

8. The industrial automation component of claim 7, at least one of:
the operations comprising receiving, via an interface of the industrial automation component, an input indicative of an authorization to perform the memory purge; and
wherein the code is executed without receiving an input indicative of an authorization to perform the memory purge based on an indication that the industrial automation component has been compromised.

9. The industrial automation component of claim 7 or 8, wherein the instructions that cause the processor to purge the non-volatile memory comprises overwriting all of the addressable locations of the non-volatile memory, or a subset of the addressable locations of the non-volatile memory with:
a first pattern consisting of 1s;
a second pattern consisting of 0s; and
a third pattern consisting of alternating 1s and 0s.

10. The industrial automation component of claim 9, wherein the instructions that cause the processor to purge the non-volatile memory comprises overwriting all of the addressable locations of the non-volatile memory, or the subset of the addressable locations of the non-volatile memory with:
a fourth pattern consisting of alternating 1s and 0s, wherein the fourth pattern is inverted relative to the third pattern; and
a fifth randomly generated pattern consisting of 1s and 0s.

11. The industrial automation component of one of claims 7 to 10, the operations comprising:
identifying a sensitivity level of the industrial automation component; and
overwriting all of the addressable locations of the non-volatile memory based on the sensitivity level of the industrial automation component.

12. A method of purging a non-volatile memory (108) of an industrial automation component (302) comprising a processor (24, 102), non-volatile memory (108) and volatile memory (110), comprising:
receiving (602), via the processor, a command to perform a purge of memory of a device (302);
retrieving (604), from non-volatile memory, via the processor (24, 102), code of a purging firmware package;
storing, in volatile memory (110), via the processor, the code;
determining (606) that one or more software applications running on the industrial automation component have respective sensitivity levels above a threshold;
executing (608), via the processor, the code from the volatile memory, thereby causing the processor to purge the non-volatile memory, including overwriting a subset of the addressable locations of the non-volatile memory, wherein the subset of the addressable locations of the non-volatile memory corresponds to portions of the non-volatile memory used by the one or more software applications determined to have sensitivity levels above the threshold; and
cycling power (610) to the industrial automation component, wherein cycling the power comprises purging the volatile memory.

13. The method of claim 12, comprising at least one of:
retrieving the code from a removable media, wherein the removable media comprises a secure digital, SD, card, a Universal Serial Bus, USB, drive, an optical disc, or a floppy disk;
receiving the purging firmware package via a network connection; and
generating a memory purge report confirming that a memory purge has been completed, wherein the memory purge report preferably includes a hash value.

## Patentansprüche

1. Ein nichtflüchtiges, computerlesbares Medium, das Anweisungen speichert, die, wenn sie von einem Prozessor (24, 102) einer industriellen Automatisierungseinrichtung ausgeführt werden, den Prozessor veranlassen, Operationen auszuführen, die aufweisen:
Empfangen (602) über den Prozessor eines Befehls zum Ausführen einer Bereinigung des Speichers einer Einrichtung (302);
Rückholen (604) eines Codes eines Löschfirmwarepakets aus einem nichtflüchtigen Speicher (108) über den Prozessor;
Speichern des Codes in einem flüchtigen Speicher (110) über den Prozessor;
Bestimmen (606), dass eine oder mehrere Softwareanwendungen, die auf der industriellen Automatisierungskomponente laufen, jeweilige Empfindlichkeitsniveaus oberhalb eines Schwellenwerts aufweisen;
Ausführen (608) des Codes aus dem flüchtigen Speicher über den Prozessor, wodurch der Prozessor veranlasst wird, den nichtflüchtigen Speicher zu löschen, einschließlich des Überschreibens einer Teilmenge der adressierbaren Speicherplätze des nichtflüchtigen Speichers, wobei die Teilmenge der adressierbaren Speicherplätze des nichtflüchtigen Speichers Abschnitten des nichtflüchtigen Speichers entspricht, die von der einen oder den mehreren Softwareanwendungen verwendet werden, für die Empfindlichkeitsstufen oberhalb des Schwellenwerts ermittelt wurden; und
Zyklisches Schalten (610) der Stromversorgung der industriellen Automatisierungsbauteile, wobei das zyklische Schalten der Stromversorgung das Löschen des flüchtigen Speichers beinhaltet.

2. Das computerlesbare Medium nach Anspruch 1, wobei die Befehle, die den Prozessor veranlassen, den nichtflüchtigen Speicher zu löschen, das Überschreiben jedes der adressierbaren Speicherplätze des nichtflüchtigen Speichers oder einer Teilmenge der adressierbaren Speicherplätze des nichtflüchtigen Speichers mit
einem ersten Muster, das aus 1en besteht;
einem zweiten Muster, das aus 0en besteht; und
einem dritten Muster, das aus abwechselnden 1en und 0en besteht.

3. Das computerlesbare Medium nach Anspruch 2, wobei die Befehle, die den Prozessor veranlassen, den nichtflüchtigen Speicher zu löschen, das Überschreiben jeder der adressierbaren Stellen des nichtflüchtigen Speichers oder der Teilmenge der adressierbaren Stellen des nichtflüchtigen Speichers mit Folgendem umfassen:
einem vierten Muster, das aus abwechselnden 1en und 0en besteht, wobei das vierte Muster relativ zum dritten Muster invertiert ist; und
einem fünften zufällig erzeugten Muster, das aus 1en und 0en besteht.

4. Das computerlesbare Medium nach einem der Ansprüche 1 bis 3, wobei die Vorgänge das Empfangen (400) des Löschfirmwarepakets über eine Netzwerkverbindung umfassen.

5. Das computerlesbare Medium nach einem der Ansprüche 1 bis 4, wobei die Vorgänge mindestens einen der folgenden Vorgänge umfassen:
Abrufen des Codes von einem entfernbaren Medium, wobei das entfernbare Medium eine Secure Digital (SD)-Karte, einen Universal Serial Bus (USB)-Laufwerk, eine optische Platte oder eine Diskette aufweist; und
Empfangen eines Basis-Softwarepakets, eines Basisfirmwarepakets oder einer Kombination davon, um die industrielle Automatisierungskomponente auf eine Werkseinstellung zurückzusetzen.

6. Das computerlesbare Medium nach einem der Ansprüche 1 bis 5, wobei die Vorgänge Folgendes umfassen:
Identifizieren einer Empfindlichkeitsstufe der industriellen Automatisierungskomponente; und
Überschreiben jeder der adressierbaren Stellen des nichtflüchtigen Speichers auf der Grundlage der Empfindlichkeitsstufe der industriellen Automatisierungskomponente.

7. Eine industrielle Automatisierungskomponente, aufweisend:
einen Prozessor (24, 102);
einen flüchtigen Speicher (110), auf den der Prozessor zugreifen kann; und
einen nichtflüchtigen Speicher (108), der eine Vielzahl von adressierbaren Speicherplätzen aufweist, auf die der Prozessor zugreifen kann, und der Befehle speichert, die, wenn sie vom Prozessor ausgeführt werden, den Prozessor veranlassen, Vorgänge auszuführen, die Folgendes umfassen:
Empfangen eines Befehls zum Durchführen einer Löschung des Speichers der industriellen Automatisierungseinrichtung (302) über den Prozessor von einer Eingabeeinrichtung, die über ein Netzwerk mit der industriellen Automatisierungseinrichtung in Kommunikationsverbindung steht;
Abrufen eines Codes eines Löschfirmwarepakets aus dem nichtflüchtigen Speicher über den Prozessor;
Speichern des Codes des Löschfirmwarepakets in dem flüchtigen Speicher über den Prozessor;
Bestimmen, dass eine oder mehrere Softwareanwendungen, die auf der industriellen Automatisierungskomponente laufen, jeweilige Empfindlichkeitsstufen über einem Schwellenwert aufweisen;
Ausführen des Codes aus dem flüchtigen Speicher über den Prozessor, wodurch der Prozessor veranlasst wird, den nichtflüchtigen Speicher zu löschen, einschließlich des Überschreibens einer Teilmenge der adressierbaren Speicherplätze des nichtflüchtigen Speichers, wobei die Teilmenge der adressierbaren Speicherplätze des nichtflüchtigen Speichers Abschnitten des nichtflüchtigen Speichers entspricht, die von der einen oder den mehreren Softwareanwendungen verwendet werden, für die Empfindlichkeitsstufen oberhalb des Schwellenwerts ermittelt wurden; und
Zyklisches Ein- und Ausschalten der Stromversorgung der industriellen Automatisierungskomponente, wobei das zyklische Ein- und Ausschalten der Stromversorgung das Löschen des flüchtigen Speichers beinhaltet.

8. Die industrielle Automatisierungskomponente nach Anspruch 7, wobei mindestens eines der folgenden Merkmale vorhanden ist:
die Vorgänge umfassen das Empfangen einer Eingabe, die eine Berechtigung zum Ausführen des Speicherlöschens anzeigt, über eine Schnittstelle der industriellen Automatisierungskomponente; und
wobei der Code ausgeführt wird, ohne einen Eingang zu empfangen, der eine Autorisierung zum Ausführen der Speicherbereinigung auf der Basis einer Anzeige anzeigt, dass die industrielle Automatisierungskomponente kompromittiert wurde.

9. Die industrielle Automatisierungskomponente nach Anspruch 7 oder 8, wobei die Befehle, die den Prozessor veranlassen, den nichtflüchtigen Speicher zu bereinigen, das Überschreiben aller adressierbaren Speicherplätze des nichtflüchtigen Speichers oder einer Teilmenge der adressierbaren Speicherplätze des nichtflüchtigen Speichers mit:
einem ersten Muster, das aus 1en besteht;
einem zweiten Muster, das aus 0en besteht; und
einem dritten Muster, das aus abwechselnden 1en und 0en besteht.

10. Die industrielle Automatisierungskomponente nach Anspruch 9, wobei die Befehle, die den Prozessor veranlassen, den nichtflüchtigen Speicher zu löschen, das Überschreiben aller adressierbaren Speicherplätze des nichtflüchtigen Speichers oder einer Teilmenge der adressierbaren Speicherplätze des nichtflüchtigen Speichers mit
einem vierten Muster, das aus abwechselnden 1en und 0en besteht, wobei das vierte Muster relativ zum dritten Muster invertiert ist; und
einem fünften zufällig erzeugten Muster, das aus 1en und 0en besteht.

11. Die industrielle Automatisierungskomponente nach einem der Ansprüche 7 bis 10, wobei die Vorgänge umfassen:
Identifizieren einer Empfindlichkeitsstufe der industriellen Automatisierungskomponente; und
Überschreiben aller adressierbaren Speicherplätze des nichtflüchtigen Speichers auf der Basis des Empfindlichkeitsgrades der industriellen Automatisierungskomponente.

12. Ein Verfahren zum Löschen eines nichtflüchtigen Speichers (108) einer industriellen Automatisierungskomponente (302), die einen Prozessor (24, 102), einen nichtflüchtigen Speicher (108) und einen flüchtigen Speicher (110) aufweist, mit den folgenden Schritten:
Empfangen (602) eines Befehls zum Durchführen einer Speicherlöschung einer Einrichtung (302) über den Prozessor;
Abrufen (604) eines Codes eines Löschfirmwarepakets aus dem nichtflüchtigen Speicher über den Prozessor (24, 102);
Speichern (602) des Codes über den Prozessor in einem flüchtigen Speicher (110);
Bestimmen (606), dass eine oder mehrere Softwareanwendungen, die auf dem industriellen Automatisierungsbauteil laufen, jeweilige Empfindlichkeitsniveaus über einem Schwellenwert aufweisen;
Ausführen (608) des Codes aus dem flüchtigen Speicher über den Prozessor, wodurch der Prozessor veranlasst wird, den nichtflüchtigen Speicher zu löschen, einschließlich des Überschreibens einer Teilmenge der adressierbaren Speicherplätze des nichtflüchtigen Speichers, wobei die Teilmenge der adressierbaren Speicherplätze des nichtflüchtigen Speichers Abschnitten des nichtflüchtigen Speichers entspricht, die von der einen oder den mehreren Softwareanwendungen verwendet werden, für die Empfindlichkeitsstufen oberhalb des Schwellenwerts ermittelt wurden; und
Zyklisches Schalten (610) der Stromversorgung der industriellen Automatisierungsbauteile, wobei das zyklische Schalten der Stromversorgung das Löschen des flüchtigen Speichers beinhaltet.

13. Das Verfahren nach Anspruch 12, das mindestens eines der folgenden Merkmale aufweist:
Abrufen des Codes von einem entfernbaren Medium, wobei das entfernbare Medium eine Secure Digital (SD)-Karte, einen Universal Serial Bus (USB)-Laufwerk, eine optische Platte oder eine Diskette aufweist;
Empfangen des Löschfirmwarepakets über eine Netzwerkverbindung; und
Erzeugen eines Speicherlöschberichts, der bestätigt, dass eine Speicherlöschung abgeschlossen wurde, wobei der Speicherlöschbericht vorzugsweise einen Hashwert aufweist.

## Revendications

1. Support lisible par ordinateur non transitoire stockant des instructions qui, lorsqu'elles sont exécutées par un processeur (24, 102) d'un composant d'automatisation industrielle, amènent le processeur à effectuer des opérations comprenant les étapes consistant à :
recevoir (602), *via* le processeur, une commande pour effectuer une purge de la mémoire d'un dispositif (302) ;
récupérer (604), à partir de la mémoire non volatile (108), *via* le processeur, le code d'un ensemble de microprogrammes de purge ;
stocker, dans la mémoire volatile (110), *via* le processeur, le code ;
déterminer (606) qu'une ou plusieurs applications logicielles s'exécutant sur le composant d'automatisation industrielle ont des niveaux de sensibilité respectifs supérieurs à un seuil ;
exécuter (608), *via* le processeur, le code à partir de la mémoire volatile, amenant ainsi le processeur à purger la mémoire non volatile, incluant l'écrasement d'un sous-ensemble des emplacements adressables de la mémoire non volatile, dans lequel le sous-ensemble des emplacements adressables de la mémoire non volatile correspond à des parties de la mémoire non volatile utilisées par une ou plusieurs applications logicielles déterminées comme ayant des niveaux de sensibilité supérieurs au seuil ; et
remettre sous tension (610) le composant d'automatisation industrielle, dans lequel la mise sous tension comprend la purge de la mémoire volatile.

2. Support lisible par ordinateur selon la revendication 1, dans lequel les instructions qui amènent le processeur à purger la mémoire non volatile comprend l'écrasement de chacun des emplacements adressables de la mémoire non volatile, ou d'un sous-ensemble des emplacements adressables de la mémoire non volatile avec :
un premier motif composé de 1
un deuxième motif composé de 0 ; et
un troisième motif constitué d'une alternance de 1 et de 0.

3. Support lisible par ordinateur selon la revendication 2, les instructions qui amènent le processeur à purger la mémoire non volatile comprend l'écrasement de chacun des emplacements adressables de la mémoire non volatile, ou du sous-ensemble des emplacements adressables de la mémoire non volatile, avec :
un quatrième motif constitué d'une alternance de 1 et de 0, dans lequel le quatrième motif est inversé par rapport au troisième motif ; et
un cinquième motif généré de manière aléatoire, composé de 1 et de 0.

4. Support lisible par ordinateur selon l'une des revendications 1 à 3, les opérations comprenant la réception (400) de l'ensemble de microprogrammes de purge *via* une connexion réseau.

5. Support lisible par ordinateur selon l'une des revendications 1 à 4, les opérations comprenant au moins l'une de :
la récupération du code à partir d'un support amovible, dans lequel le support amovible comprend une carte numérique sécurisée, SD, un lecteur Universal Serial Bus, USB, un disque optique, ou une disquette ; et
la réception d'un progiciel de base, d'un microcode de base ou d'une combinaison de ceux-ci, pour remettre le composant d'automatisation industrielle en configuration d'usine.

6. Support lisible par ordinateur selon l'une des revendications 1 à 5, les opérations comprenant les étapes consistant à :
l'identification d'un niveau de sensibilité du composant d'automatisation industrielle ; et
écraser chacun des emplacements adressables de la mémoire non volatile en fonction du niveau de sensibilité du composant d'automatisation industrielle.

7. Composant d'automatisation industrielle, comprenant :
un processeur (24, 102) ;
une mémoire volatile (110), accessible par le processeur ; et
une mémoire non volatile (108), comprenant une pluralité d'emplacements adressables, accessibles par le processeur, et stockant des instructions qui, lorsqu'elles sont exécutées par le processeur, amènent ce dernier à effectuer des opérations comprenant les étapes consistant à :
recevoir, *via* le processeur, à partir d'un dispositif d'entrée couplé de manière communicative au composant d'automatisation industrielle *via* un réseau, une commande pour effectuer une purge de la mémoire du composant d'automatisation industrielle (302) ;
récupérer, à partir de la mémoire non volatile, *via* le processeur, le code d'un ensemble de microprogrammes de purge ;
stocker, dans la mémoire volatile, *via* le processeur, le code de l'ensemble de microprogrammes de purge ;
déterminer qu'une ou plusieurs applications logicielles s'exécutant sur le composant d'automatisation industrielle ont des niveaux de sensibilité respectifs supérieurs à un seuil ;
exécuter, *via* le processeur, le code à partir de la mémoire volatile, amenant ainsi le processeur à purger la mémoire non volatile, incluant l'écrasement d'un sous-ensemble des emplacements adressables de la mémoire non volatile, dans lequel le sous-ensemble des emplacements adressables de la mémoire non volatile correspond à des parties de la mémoire non volatile utilisées par une ou plusieurs applications logicielles déterminées comme ayant des niveaux de sensibilité supérieurs au seuil ; et
remettre sous tension le composant d'automatisation industrielle, dans laquelle la remise sous tension comprend la purge de la mémoire volatile.

8. Composant d'automatisation industrielle selon la revendication 7, au moins l'une des opérations suivantes :
les opérations comprenant la réception, *via* une interface du composant d'automatisation industrielle, d'une entrée indiquant une autorisation d'effectuer la purge de la mémoire ; et
dans lequel le code est exécuté sans recevoir une entrée indiquant une autorisation d'effectuer la purge de la mémoire sur la base d'une indication que le composant d'automatisation industrielle a été compromis.

9. Composant d'automatisation industrielle selon la revendication 7 ou 8, dans lequel les instructions qui amènent le processeur à purger la mémoire non volatile comprennent l'écrasement de tous les emplacements adressables de la mémoire non volatile, ou d'un sous-ensemble des emplacements adressables de la mémoire non volatile avec :
un premier motif composé de 1
un deuxième motif composé de 0 ; et
un troisième motif constitué d'une alternance de 1 et de 0.

10. Composant d'automatisation industrielle selon la revendication 9, dans lequel les instructions qui amènent le processeur à purger la mémoire non volatile comprennent l'écrasement de tous les emplacements adressables de la mémoire non volatile, ou du sous-ensemble des emplacements adressables de la mémoire non volatile avec :
un quatrième motif constitué d'une alternance de 1 et de 0, dans lequel le quatrième motif est inversé par rapport au troisième motif ; et
un cinquième motif généré de manière aléatoire, composé de 1 et de 0.

11. Composant d'automatisation industrielle selon l'une des revendications 7 à 10, les opérations comprenant :
l'identification d'un niveau de sensibilité du composant d'automatisation industrielle ; et
l'écrasement de tous les emplacements adressables de la mémoire non volatile en fonction du niveau de sensibilité du composant d'automatisation industrielle.

12. Procédé de purge d'une mémoire non volatile (108) d'un composant d'automatisation industrielle (302) comprenant un processeur (24, 102), une mémoire non volatile (108) et une mémoire volatile (110), comprenant les étapes consistant à :
recevoir (602), *via* le processeur, une commande pour effectuer une purge de la mémoire d'un dispositif (302) ;
récupérer (604), à partir de la mémoire non volatile, *via* le processeur (24, 102), le code d'un ensemble de microprogrammes de purge ;
stocker, dans la mémoire volatile (110), *via* le processeur, le code ;
déterminer (606) qu'une ou plusieurs applications logicielles s'exécutant sur le composant d'automatisation industrielle ont des niveaux de sensibilité respectifs supérieurs à un seuil ;
exécuter (608), *via* le processeur, le code à partir de la mémoire volatile, amenant ainsi le processeur à purger la mémoire non volatile, incluant l'écrasement d'un sous-ensemble des emplacements adressables de la mémoire non volatile, dans lequel le sous-ensemble des emplacements adressables de la mémoire non volatile correspond à des parties de la mémoire non volatile utilisées par une ou plusieurs applications logicielles déterminées comme ayant des niveaux de sensibilité supérieurs au seuil ; et
remettre sous tension (610) le composant d'automatisation industrielle, dans lequel la mise sous tension comprend la purge de la mémoire volatile.

13. Procédé selon la revendication 12, comprenant au moins l'un des éléments suivants :
récupérer le code à partir d'un support amovible, dans lequel le support amovible comprend une carte numérique sécurisée, SD, un lecteur Universal Serial Bus, USB, un disque optique, ou une disquette ;
recevoir l'ensemble de microprogrammes de purge *via* une connexion réseau ; et
générer un rapport de purge de la mémoire confirmant qu'une purge de la mémoire a été effectuée, dans lequel le rapport de purge de la mémoire inclut de préférence une valeur de hachage.
